# EUROPEAN PATENT APPLICATION

(11) **EP 4 032 641 A1**
(43) Date of publication of application: **27.07.2022**
(21) Application number: 21382055.8
(22) Date of filing: 22.01.2021
(51) Int. Cl.: B23B 5/28, B23Q 1/01, B23Q 11/00

(54) **MACHINE TOOL**

(71) Applicant: Danobat S. Coop., 20870 Elgoibar (ES)
(72) Inventor: Vicario Burgos, Angel Maria, 20870 Elgoibar (ES)
(74) Representative: Balder IP Law, S.L.

(57) **Abstract**

Machine tool 101, comprising a main frame 102, a working table 105 and a tool holder 109 mounted on the main frame. The tool holder is configured to carry a tool 110 for machining a workpiece W by means of said tool. The tool holder is displaceable relative to the main frame in a first direction parallel to the machining axis M between an operative position and an inoperative position. The machine tool comprises a secondary frame 124 that defines a first plane P1 substantially parallel to a surface S the machine tool is mounted on and a second plane P2 that forms an angle "α", selected from a range between 10 and 30 degrees, with the first plane. The main frame is mounted on the secondary frame in correspondence with the second plane such that the machining axis forms the same angle "α" with a Z-axis that is perpendicular to the surface.

## Description

### TECHNICAL FIELD

In general, the present invention relates to the field of machine tools, and more particularly, to machine tools, such as lathes, milling machines, drilling or boring machines, etc., having a frame or chassis configured to tilt of the working table (typically positioned parallel to the floor) enabling an inclined positioning of the clamping chuck (working table and workpiece fastening/support mechanism) and, for rotary tables, of the main spindle locating them below the cross-slide guiding system of the machine tool.

### STATE OF THE ART

Machine tools are well-known devices used for machining workpieces, such as workpieces of metal or other materials, to provide them with the desired shape and configuration, for example, by drilling or boring holes in the workpieces and/or by machining edges to give them a desired or required shape. As used herein, the term "machine tool" may refer to any kind of tool able to modify the shape and/or configuration of a workpiece by a subtractive cutting process, e.g., cutting, sanding, knurling, drilling, boring, facing, turning, etc. When the machine tool uses a subtractive cutting process it generally produces a great amount of swarf such as metal shavings, wood chips, etc., depending on the material the workpiece is made of.

These machine tools have been widely used in the manufacturing and re-turning processes of railway wheels, although they have been also used in many other industrial sectors. As used herein, the term "railway wheel" may refer to any type of wheel specially designed for use on railway tracks. These railway wheels, that may be train wheels, subway wheels, tram wheels, funicular wheels, etc., are generally made of metal and are machined using a lathe to a standardized shape, called profile, before being installed onto the axle and mounted on a railway carriage or locomotive, or in a bogie. As used herein, the term "lathe" may refer to a machine tool that rotates a workpiece about an axis of rotation to perform various operations such as cutting, sanding, knurling, drilling, deformation, facing, and turning, with tools that are applied to the workpiece to create an object with symmetry about that axis. Machines of this type are normally provided with some kind of tool holder or ram, in which the tools can be replaced depending on the task to be performed by the machine at a certain time or for a certain period. In this specification, the term "tool" is to be interpreted in a generic sense, and can, but must not, include an associated spindle head.

Re-turning, which essentially is a re-profiling operation, of rail wheels maximizes railway wheel life and serves to extend rail life as well.

These machine tools generate great amounts of swarf that can be extremely sharp and they can cause serious injuries if not handled correctly. It is not uncommon for swarf flying off the machine tool to be ejected with great force and to fly several meters. Swarf can be small particles, such as the gritty swarf from grinding metal, or long, stringy tendrils, such as the springy chips from turning tough metals. Although these machine tools generally have some means for guiding swarf out of the tool, it is quite common that said swarf gets jammed in the machine tool and then, embedded into the moving parts leading to degradation of the machine's precision. This may also require a periodic cleaning of the machine tool by experienced operators which implies a significant increase in costs and a reduction in efficiency of the machining process since the tool has to be inoperative during the cleaning process. To avoid swarf to be ejected from the machine tool, these machine tools are normally at least partially covered with an openable sheet-metal enclosure with polycarbonate windows to allow seeing the machine tool from the outside of the enclosure.

Besides, most of the machinery of the machine tools is located between the working table, e.g., a rotary table, on which the workpiece is positioned and retained to be machined and the surface on which the machine tool is mounted on, generally the floor of the facility in which it is installed. This makes extraordinarily difficult to perform maintenance tasks or replace pieces in all this machinery, requiring having to disassemble some of these components, such as the working table, the cylinder that actuate the means for retaining the workpiece, the tool head, mechanical labyrinth, etc., to have access to the elements located below. Alternatively, the facility may have a maintenance pit located beneath the machine tool so the maintenance operator can access this machinery from below.

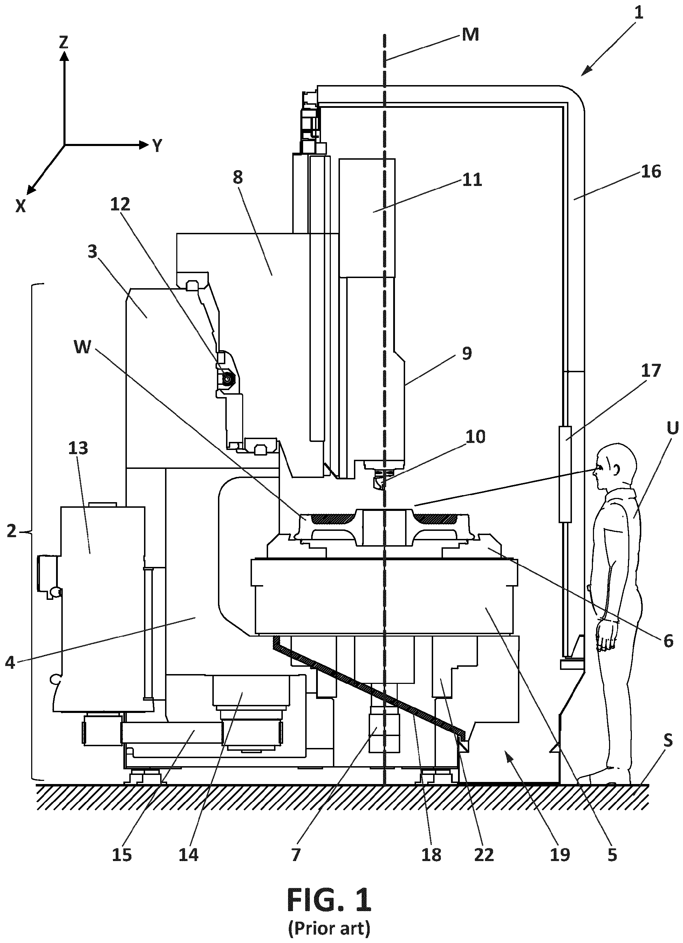

Figure 1 shows an exemplary vertical lathe 1 with a main frame 2, formed by one single vertical column 4 and other structural elements (including a cross beam 3), mounted on a surface (S), for example the floor of an industrial facility. The vertical lathe 1 further comprises a rotary table or plate 5 mounted on the main frame 2 that rotates, actuated by a first motor 13 and with interposition of a headstock 22 (said headstock 22 generally comprises the bearings to provide the rotational movement to the rotary table 5), around Z-axis and that is fixed in the Z-direction. In some other examples, the rotary table 5 may move in said Z-direction. The rotary table 5 comprises a supporting/fastening element 6 for the workpiece (W) that comprises fastening/retaining means actuated by a hydraulic cylinder 7 (generally by interposition of a main spindle (not shown in this figure) to retain/release the workpiece (W). In such example, the supporting element 6 may be an annular piece on which a train wheel (W) is removably fixed by means of retaining elements like grippers, clamps or similar. The vertical lathe 1 further comprises a cross beam 3 fixedly coupled to the main frame 2 and a tool carrier 8 that moves horizontally in a direction substantially parallel to the X-axis relative to the cross beam 3 along horizontal guides and by interposition of rollers, spindles, bearings and the like. This tool carrier 8 is actuated by a second motor 12 located between the cross beam 3 and the tool carrier 8. A tool holder or ram 9 moves vertically in a direction substantially parallel to Z-axis relative to the tool carrier 8 along vertical guides and by interposition of rollers, spindles, bearings, and the like. The tool holder 9 is actuated by a third motor 11 to move vertically relative to the tool carrier 8. The tool holder 8 moves the tool 10, e.g., a cutter, closer or further away from the train wheel (W). By default, the centre of the tool 10 mounted on the tool holder 9 is aligned with the rotating axis of the rotary table 5, defining the machining axis M of the vertical lathe 1. It is important for the quality of the machined product that said default position is determined accurately as this is used to calibrate the tool holder 9. The tool 10 is interchangeable tool and may be a fixed tool or a rotary tool actuated by another motor (not shown in this figure).

The movement generated by the first motor 13 is transmitted to a gearbox 14 by interposition of a transmission belt 15. Alternatively, transmission chains, transmission gears or the like, may be used to transmit movement from the first motor 13 to the gearbox 14. While the second and third motors 12,11 may incorporate their gearboxes (not shown in this figure), the first motor 13 and its corresponding gearbox 14 have to be two separate and independent elements connected by the transmission belt 15 due to the lack of space in the part of the vertical lathe 1 corresponding to the lower portion of the main frame 2. The gearbox 14 is normally inserted into a hole (not shown in this figure) in the main frame 2 from above, and then screwed to the main frame 2. Then, the rotary table 5 is coupled to the main frame 2 covering the access to the gearbox 14, mechanical labyrinth 21, hydraulic cylinder 7 and headstock 22. This necessarily requires that, in case of malfunctioning of the gearbox 14, the rotary table 5, the workpiece support 6, the mechanical labyrinth 21, the hydraulic cylinder 7, the headstock 22, the electrical and mechanical connections between these elements, etc., have to be demounted/disconnected to have access to the gearbox 14 so it can be repaired or replaced. This operation is very inefficient in terms of time and costs.

The vertical lathe 1 is partially covered with an openable sheet-metal enclosure 16 with polycarbonate windows 17 to allow seeing the vertical lathe 1 from the outside of the enclosure 16.

The vertical lathe 1 also incorporates a planar plate or sheet 18 that is located below the rotary table 5 and that is inclined relative to the working plane defined by the working surface (i.e., upper surface) of the rotary table 5 to drive swarf generated during the machining process outwardly towards a space 19 where a swarf extractor may be located. The inclination of the planar plate 18 is limited by the height at which the rotary table 5 is located. Since these vertical lathes 1 are designed to allow a user (U) to see the machining process from the outside of the enclosure 16, the upper surface of the rotary table 5 has to be within the user's angle of vision which implies that the inclination of the planar plate 18 may not be great enough to drive all the swarf away from the lathe so at least part of it can be jammed between the components of the lathe 1. Besides, in the space 19 existing between the lower portion of the enclosure 16 and the free end of the planar plate 18 there may be a swarf extractor (not shown in this figure) that may not be powerful enough to extract all swarf generated during the machining process, so part of the swarf may accumulate and a periodic emptying of the space 19 by a user may be required, period of time during which the vertical lathe 1 has to be stopped. Additionally, in the event of malfunctioning of the transmission belt 15, the hydraulic cylinder 7, or of any other machinery located in correspondence with the lower portion of the vertical column 3, their repair or replacement can be quite complex and time-consuming due to the lack of space for the maintenance operator to have access to said components. In such cases, it is necessary a maintenance pit beneath the vertical lathe 1.

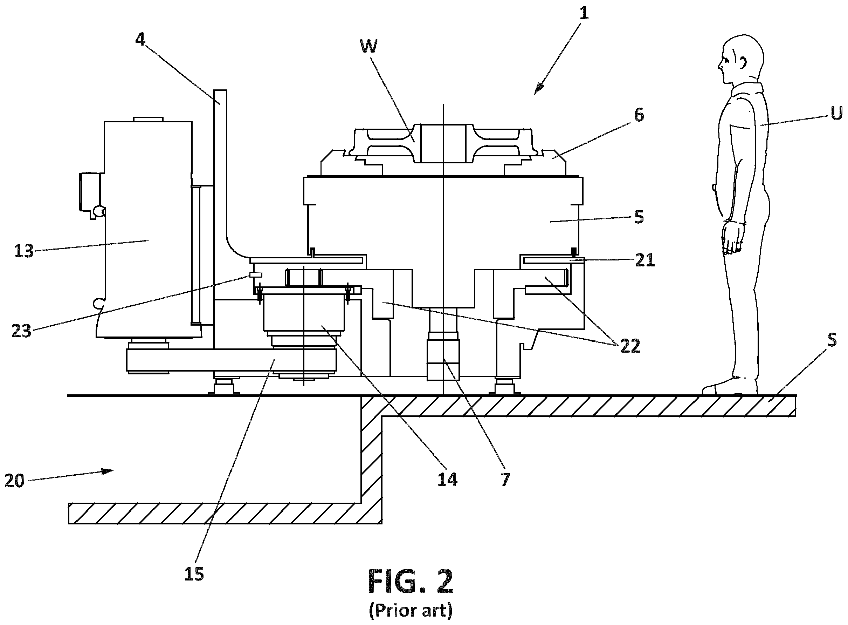

Figure 2 shows the exemplary vertical lathe 1 of Figure 1 with a maintenance pit 20 positioned beneath the rear and bottom portion of the vertical lathe 1. The maintenance pit 20 facilitates accessing the machinery, including for example the first motor 13, the transmission belt 15 and the gearbox 14, located at the bottom of the vertical lathe 1. For example, if the gearbox 14 (with the transmission belt 15 being parallel to the plane of the floor) of the vertical lathe 1 of Figure 1 has to be replaced or repaired, said vertical lathe 1 has to be firstly placed on a maintenance pit 20 as shown in Figure 2. Then, with the maintenance operator inside the maintenance pit 20, the transmission belt 15 is disassembled. The workpiece support 6, the rotary table 5 and the hydraulic cylinder 7 are then demounted. After that, the mechanical labyrinth 21 and the headstock 22 are removed and the hydraulic and electric connections of the gearbox 14 are disconnected. Finally, the screws that join the gearbox 14 to the main frame 2 are removed and the gearbox 14 can be extracted from the main frame 2. This operation for demounting the gearbox 14 has to be carried out both, when the screws that join the gearbox 14 to the main frame 2 have to be unscrewed from the above (via the space left by the rotary table 5) or when the screws have to be unscrewed from below (i.e., from the maintenance pit 20). For mounting the gearbox 14 on the main frame 2, the same steps have to be carried out but in reverse order. This mounting/demounting process requires having a maintenance pit in the facility, and it is quite complex and time consuming. During this time, the machine tool 1 has to be stopped so it severely affects to the efficiency and performance of the machine tool 1. The same operation has to done if the rotation sensors 23 of the gearbox 14 that measure the movement of the headstock 22 have to be replaced or repaired.

Machine tools for performing machining operations such as drilling and milling, for example, by rotary motion of a tool, for example, for shaping and boring railway wheels, are well known in the art, and it is thus not considered necessary to describe the operation of a tool drive or of a tool holding mechanism, as the skilled person is aware of how to design this kind of equipment and as appropriate devices are commercially available.

Machine tools are conventionally numerically controlled and in machine tools with rotary tools, machining is performed by producing a controlled relative movement between the workpiece and the corresponding tool. For example, it is known to provide a machine with one or more fixed tools, and to move the one or more workpieces in relation to the fixed tool. It is known to provide a machine with one or more fixed workpieces, and to move the one or more tools in relation to the fixed workpieces. Besides, it is also known to provide a machine with one or more movable tools and one or more movable workpieces and to move the workpieces and the tools relative to each other.

Therefore, there is a need in the state of the art for a machine tool that facilitates accessing the machinery located at the bottom of the machine tool and that improves the removal of swarf, driving chips, metal scraps or similar resulting from the machining operation from the machine tool. There is also a need in the state of the art for a machine tool with a gearbox for the motor that moves the rotary table that is more easily accessible from below so it can be quickly and easily repaired or replaced.

### DESCRIPTION OF THE INVENTION

The object of the invention is a machine tool that comprises a main frame and a working table or plate and at least one tool holder mounted on the main frame. The working table is configured to receive at least one workpiece, for example, any piece of a material that is suitable to be machined. This working table may comprise at least one workpiece support mounted on it, said workpiece supports being configured to removably fixing/retaining the workpiece (W) by some fastening/retaining means, such as a clamping or gripping mechanism, actuated by a hydraulic cylinder or similar. As used herein, the main frame refers to the rigid structure that supports the components of the machine tool, i.e., machinery, electrical and mechanical connections, electronics, etc. As used herein, the working table or plate may refer to any surface suitable for receiving, directly or by interposition of some fastening means, the workpiece to be machine. Preferably, the working table or plate may have an upper planar surface. In some embodiments, this working table may be a rotary table.

The at least one tool holder is configured for carrying at least one tool for machining the at least one workpiece by means of said at least one tool.

The at least one tool holder is displaceable relative to the main frame in a first direction parallel to a machining axis (M) between an operative position in which said tool holder faces the working table, and thus the workpiece to machine it, and an inoperative position in which the tool holder does not face the working table and thus, it is positioned far away from the workpiece. This machining axis (M) is the axis defined by the centre of the tool and the movement of tool relative to the working table. Preferably, when the machine tool integrates a rotary table, the machining axis (M) will be aligned with the rotating axis of the rotary table.

The machine tool further comprises a secondary frame that defines a first plane (P1) substantially parallel to a surface (S) the machine tool is mounted on and a second plane (P2) that forms an angle "α", said angle being selected from a range between 10 and 30 degrees, with the first plane (P1), wherein the main frame is mounted on the secondary frame in correspondence with the second plane (P2) such that the machining axis (M) defined by the tool forms the same angle "α" relative to a Z-axis that is perpendicular to the surface (S).

By having the upper plane, i.e., the second plane, of the secondary frame at an angle between 10° and 30° relative to the surface on which the machine tool is placed, all the machinery of the machine tool, including the tool, the tool holder, the workpiece support, the working table, motors, etc. and the workpiece may be at the same angle relative to the surface on which the machine tool is placed.

Preferably, the second plane (P2) will not be at an angle lower than 10° because said angle does not provide enough inclination to the machinery for achieving the advantages enumerated below. Preferably, the second plane (P2) will not be at an angle greater than 30° because such inclination may generate stability problems in the machine tool due to load displacements that may result in the fall of the machine tool or of any of its components, including the workpiece.

In some embodiments, the secondary frame is wedge-shaped, when viewed from a side of the machine tool. In this way, the front side of the main frame may be located in proximity to the surface (S), e.g., separated from the said surface by the supports of the secondary frame, while the rear side of the main frame may be separated from the surface (S) by the corresponding supports and a distance that will correspond to the angle selected and the width of the machine tool (said width being the distance from the front side and the rear side of the machine tool). As used herein, the term "front side" may refer to the side of the machine tool or frame in correspondence with the user (U) in Figure 1. Similarly, the term "rear side" may refer to the side of the machine tool or frame which is opposite to the front side.

In some embodiments, at least part of the secondary frame is a hollow structure. Preferably, at least the portion of the secondary frame located at the rear side of the machine tool is a hollow structure. In this way, the maintenance operator has enough space within the secondary frame to have access to the machinery located in said rear and bottom portion of the main frame. This avoids having to use a maintenance pit.

In some embodiments, the machine tool comprises means for driving the swarf generated in the machining process out of the machining tool. Preferably, the means for driving the swarf are a planar plate located beneath the working table such that the planar plate is inclined relative to the working surface defined by the working table and is configured to drive swarf generated in the machining process outwardly towards a front side of the machine tool. By adding the inclination provided by the secondary frame to the inclination that already has the planar plate relative to the working surface, a proper driving of the swarf out the machine tool is ensured. Alternatively, the means for driving the swarf may be a swarf conveyor or any other mechanism for driving swarf out of the machine tool.

In some embodiments, the machine tool may comprise a swarf extractor located in correspondence with its front side and the surface (S). This swarf extractor may be configured to extract the swarf driven by the planar plate, preferably to extract it from the enclosure that covers the machine tool, and drive it far away from the machine tool.

In some embodiments, the machine tool comprises a tool carrier where the at least one tool holder is coupled to. The tool carrier is configured to move horizontally in a second direction, said second direction being parallel to the horizontal X-axis, wherein the X-axis is perpendicular to the Z-axis. For example, this tool carrier may move horizontally in the second direction relative to a cross beam that is part of the main frame.

In some embodiments, the machining axis (M) is substantially perpendicular to the working plane defined by the working table and/or the at least one workpiece support.

In some embodiments, the workpiece is a rail wheel, preferably a train wheel, tram wheel, subway wheel, etc. Alternatively, the workpiece may be any workpiece made of a material suitable to be machined.

In some embodiments, the angle "α" is selected from a range between 15° and 25° and preferably, from a range between 18° and 22°. More preferably, the angle "α" is 20°. These tilting angles optimize the advantages enumerated below at the same time that ensure that there are no problems with load displacements that may compromise the safety of the machine tool.

In some embodiments, the main frame and the secondary frame are coupled to each other forming one single solid frame. Said main frame and secondary frame may be screwed to each other and more preferably, they may be welded to each other.

In some embodiments, the machine tool is a lathe. Alternatively, the machine tool may be milling machine, a turning machine, a grinding machine, a broaching machine, a sharper machine, a planer machine and a drilling machine among many other well-known machine tools.

In some embodiments, the working table is a rotary table whose centre is preferably centred with the machining axis (M) defined by the tool. Preferably, the rotating table must be perpendicular to the machining axis (M).

In some embodiments, the machine tool comprises a gear box configured to transmit the movement of a motor via transmission means to the gearbox. Preferably, this gearbox is configured to transmit a rotational movement to the headstock of the rotary table. The transmission means can be selected from a group comprising transmission belts, transmission chains, transmission gears and any combination thereof. The gearbox is removably fixed, e.g., by screws, to a lower portion of the main frame. Since the gearbox is normally only accessible through the working table, i.e., , the workpiece support, the working table, etc., have to be firstly removed to have access to said gearbox, by having all the machinery, including the gearbox, inclined relative to the floor and being said gearbox easily accessible from below, thanks to the space enclosed by the secondary frame, the gearbox can be accessed by a maintenance operator through said secondary frame without having to demount other components of the machine tool and/or having a maintenance pit.

By increasing the inclination between 10 and 30° of all machinery of the machine tool, the machine tool of the present invention achieves the following advantages:
- the user's angle of vision on the workpiece through the polycarbonate window of the sheet-metal enclosure is significantly increased. This allows the user to easily identify any problem associated to the machining process;
- the machinery located at the rear and bottom portion of the machine tool, in correspondence with the lower section of the vertical column, is easily accessible from below, avoiding having to disassemble other components off the machine tool to have access to them and also avoiding the need to have a maintenance pit;
- by having a gearbox configured to transmit the movement of a motor via transmission belts, transmission chains, transmission gears, or similar, to the rotary table that is accessible for the maintenance operator from below through the space enclosed by the secondary frame, and being said gearbox removably fixed to the main frame from below too, it can be easily repaired or replaced by accessing said gearbox through space enclosed by the secondary frame. Therefore, demounting other elements of the machine tool for having access to the gearbox is avoided; and
- by increasing the inclination of the planar plate, the inclination of the already inclined planar plate is increased with the inclination provided by the secondary frame, it is guaranteed that the swarf resulting from the machining operation is driven away from the machine tool. This extends the operation life of the machine tool.

Other advantages are that accumulation of coolant fluid and swarf in the working table is minimized, there is no coolant fluid or swarf projection on the polycarbonate window and the fastening mechanism used to removably fix the working piece to the working table is more easily accessible for the insertion/removal of the workpieces and maintenance labours.

### BRIEF DESCRIPTION OF THE DRAWINGS

To complete the description and in order to provide for a better understanding of the invention, a set of drawings is provided. Said drawings form an integral part of the description and illustrate an embodiment of the invention, which should not be interpreted as restricting the scope of the invention, but just as an example of how the invention can be carried out.

The drawings comprise the following figures:
Fig. 1 shows a cross section side view of a vertical lathe with a single cutting head according to the prior art.
Fig. 2 shows a cross section side view of the lower portion of the vertical lathe of Figure 1 with a maintenance pit, according to the prior art.
Fig. 3 shows a cross section side view of a tilted lathe according to an embodiment of the invention.
Figs. 4A-D show cross section side views of the tilted lathe of Figure 3 with four different tilting angles relative to the ground.

### DETAILED DESCRIPTION OF THE INVENTION

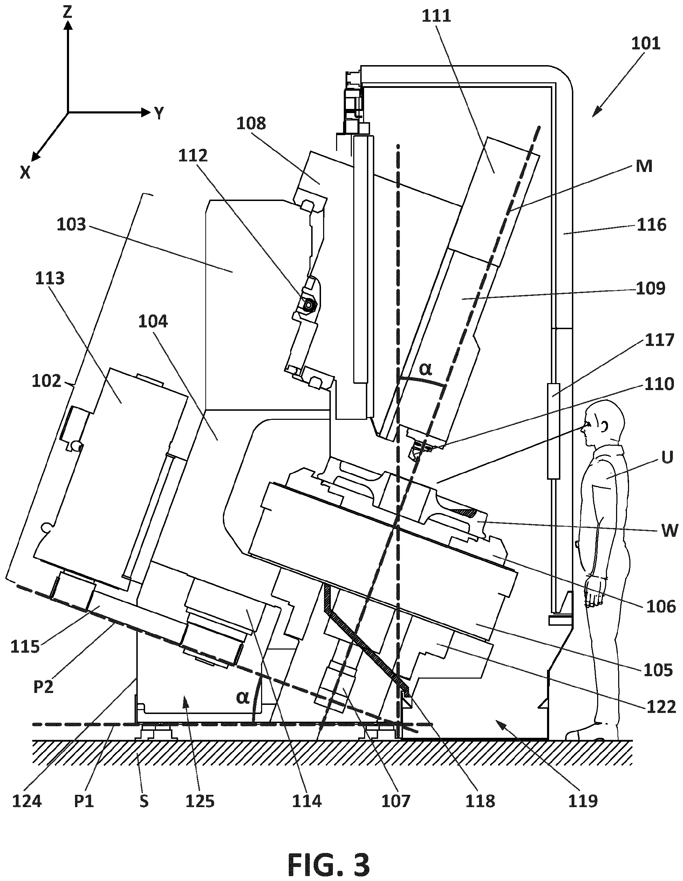

Fig. 3 shows a cross section side view of a tilted lathe 101 according to an embodiment of the invention. It should be understood that the tilted lathe 101 of Figure 3 may include additional components and that some of the components described herein may be removed and/or modified without departing from a scope of the described tilted lathe 101. Additionally, implementation of the tilted lathe 101 is not limited to such embodiment. In Figure 3 the same reference numbers than in Figure 1, but in hundreds, have been used to refer to the same or like elements.

Besides, it should be understood that although Figure 3 shows a tilted lathe 101, the solution herein described may be applied to any other machine tool such as a milling machine, a turning machine, a grinding machine, a broaching machine, a sharper machine, a planer machine and a drilling machine among many others, that may be tilted relative to the surface on which the machine tool is mounted or installed on.

The tilted lathe 101 has essentially the same elements than the vertical lathe 1 shown in Figure 1 and a secondary wedge-shaped frame 124 to which the main frame 102 is coupled. As can be seen form the figure, all the machinery of the vertical lathe 1 is attached to the main frame 102 while the secondary frame 124 defines a hollow inner chamber 125 between the main frame 102 and the floor S. This secondary frame 124 defines a first plane P1 substantially parallel to a surface S, e.g., the floor of an industrial facility, the machine tool 101 is mounted on and a second plane P2 that forms an angle "α" with the first plane P1. This angle "α" will be preferably selected from a range between 10° and 30°. In this particular embodiment the angle "α" is 20°. The tilting introduced by the secondary frame 124 makes that the machining axis M defined by the linear displacement of the tool 110, e.g., a cutter, forms the same angle "α" relative to a Z-axis that is perpendicular the surface (S). In this particular embodiment, the axis defined by the tool 110 is aligned with the rotating axis of the rotary table 105. In particular, the main frame 102 is attached, e.g., screwed or welded, to the secondary frame 124 in correspondence with the second plane P2.

Due to the inclination of all the machinery of the machine tool 101, the inclination of the planar plate 118 can be increased with respect to the inclination it could have in a conventional vertical lathe. Thus, the inclination of the planar plate 118 is not limited by the height at which the rotary table 105 is located. This ensures that all swarf generated during the machining process can be properly drive out form the machine tool. Obviously, this will avoid damages in the machine tool 101 that may affect its precision and it will also extend the operational life of the machine tool 101.

As can be seen from Figure 3, the geometry and relative position of the vertical column 104, the cross beam 103, the tool carrier 108, the second motor 112 and the corresponding bearings, spindles, rollers and the like, can be adjusted, when compared with the embodiment shown in Figure 1, to ensure a proper load distribution and a proper operation of the lathe 101.

The vertical lathe 101 of Figure 3 is also partially covered with an openable sheet-metal enclosure 116 with polycarbonate windows 117 to allow seeing the vertical lathe 101 from the outside of the enclosure 116. It may also comprise a swarf extractor (not shown in this figure) located in the space 119 between the lower portion of the enclosure 116 and the free end of the planar plate 118 to extract the swarf generated during the machining process.

In such embodiment, the gearbox 114 can be repaired or removed by a maintenance operator from the space 125 enclosed by secondary frame 124. Firstly, the operator can remove the transmission belt 115 without requiring a maintenance pit. Then, the electric and hydraulic connections of the gearbox 114 can be disconnected and the screws that fasten the gearbox 114 to the main frame 102 can be removed and the gearbox 114 can be easily demounted. For mounting the gearbox 114 on the main frame 102, the same steps have to be carried out but in reverse order. Obviously, this mounting/demounting operation is simplified by the existence of the space 125 through which the maintenance operator can access to the machinery located in correspondence with the lower section of the vertical column 104, in particular, the transmission belt 115, rotation sensors of the gearbox 114, the hydraulic cylinder 107, etc, without requiring a maintenance pit and avoiding having to disassemble other components of the machine tool 101.

While figure 3 shows a tilted lathe 101 with one single vertical column 104, one tool 110, or one single train wheel (W), other embodiments of the invention may integrate more vertical columns, tools or workpiece, which in turn would have their corresponding tool holders 109 and workpiece supports 106.

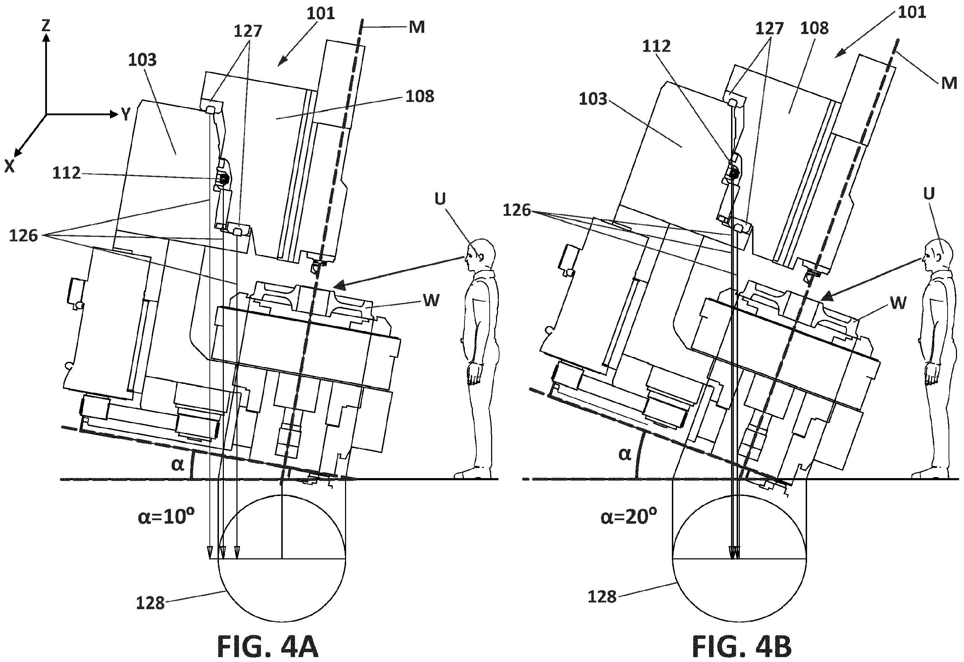

Figs. 4A-D show cross section side views of the tilted lathe 101 of Figure 3 with four different tilting angles relative to the floor S. Said figures also show the orthogonal projections 126 of the horizontal guides and ballscrews 127 and of the second motor 112 used for the horizontal movement of the tool carrier 108 relative to the cross beam 103 of the main frame 102 vs. the orthogonal projection 128 of the workpiece W, a train wheel in this case, on the floor S in the direction of the machining axis M.

Figure 4A shows a cross section side view of the tilted lathe 101 of Figure 3 with a tilting angle "α" of 10° relative to the floor S. In such embodiment, two of the orthogonal projections 126, one corresponding to the second motor 112 and the other corresponding to the horizontal guides and ballscrews located in the lower portion of the tool carrier 108, fall within the projection 128 of the workpiece W on the floor S while the third orthogonal projection 126, corresponding to the horizontal guides and ballscrews located in the upper portion of the tool carrier 108, falls outside the projection 128 but it is very close. Besides the angle "α" at 10° is the minimum that allows having access to the machinery located in correspondence with the lower section of the vertical column 104, in particular, the transmission belt 115, the rotation sensors of the gearbox 114 and the gearbox 114. This angle also optimizes cooling fluid and swarf removal from the working surface and from the machine tool, and improves the user's vision of the machining process.

Figure 4B shows a cross section side view of the tilted lathe 101 of Figure 3 with a tilting angle "α" of 20° relative to the floor S. In such embodiment, the three orthogonal projections 126 fall in the centre of the projection 128 of the workpiece W on the floor S. This is the optimum solution. Besides the angle "α" at 20° allows having access to the machinery located in correspondence with the lower section of the vertical column 104, in particular, the transmission belt 115, the rotation sensors of the gearbox 114 and the gearbox 114. This angle also optimizes cooling fluid and swarf removal from the working surface and from the machine tool, and improves the user's vision of the machining process.

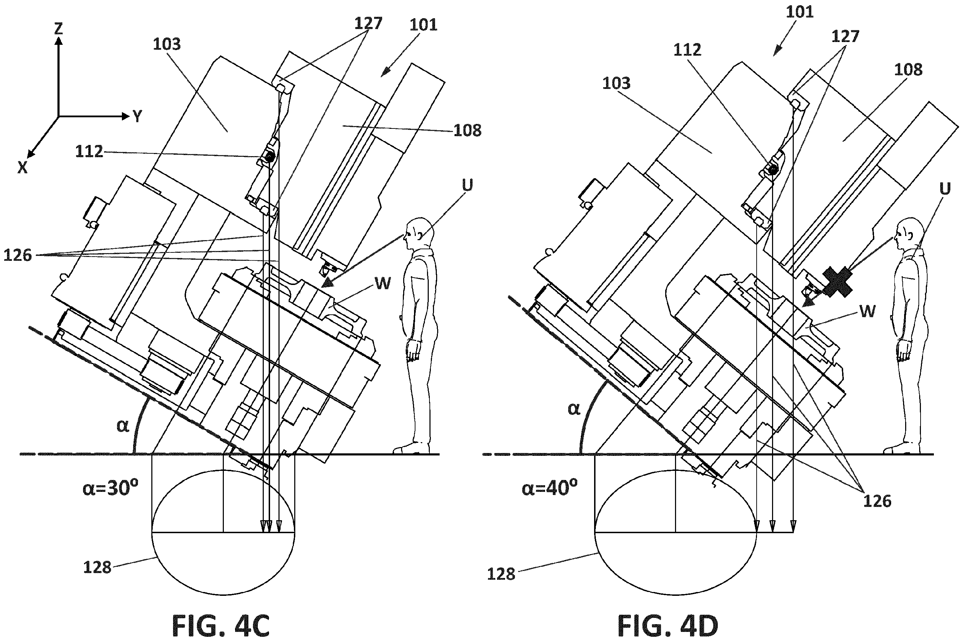

Figure 4C shows a cross section side view of the tilted lathe 101 of Figure 3 with a tilting angle "α" of 30° relative to the floor S. In such embodiment, the three orthogonal projections 126 fall within the projection 128 of the workpiece W on the floor S, but they are deviated from the centre thereof. Besides the angle "α" at 30° is the maximum that allows having access to the machinery located in correspondence with the lower section of the vertical column 104, in particular, the transmission belt 115, the rotation sensors of the gearbox 114 and the gearbox 114, at the same time that guarantees that there are no problems with load displacements that may result in the fall of the machine tool 101 or of any of its components, including the workpiece W. This angle also optimizes cooling fluid and swarf removal from the working surface and from the machine tool 101, and improves the user's vision of the machining process.

Figure 4D shows a cross section side view of the tilted lathe 101 of Figure 3 with a tilting angle "α" of 40° relative to the floor S. In such embodiment, the three orthogonal projections 126 fall outside the projection 128 of the workpiece W on the floor S. This generates problems with load displacements that may result in the fall of the machine tool 101 or of any of its components, including the workpiece W. Besides the angle "α" at 40° does not allow the user to see the machining process.

## Claims

1. A machine tool (101), comprising:
a main frame (102);
a working table (105) mounted on the main frame (102), the working table (105) being configured to receive at least one workpiece (W);
at least one tool holder (109) mounted on the main frame (102), the at least one tool holder (109) being configured for carrying at least one tool (110) for machining the at least one workpiece (W) by means of said at least one tool (110);
wherein the at least one tool holder (109) is displaceable relative to the main frame (102) in a first direction parallel to a machining axis (M) between an operative position in which said tool holder (109) faces the working table (105) and an inoperative position in which the tool holder (109) does not face any working table (105);
**characterized in that** the machine tool (101) comprises a secondary frame (124) that defines a first plane (P1) substantially parallel to a surface (S) the machine tool (101) is mounted on and a second plane (P2) that forms an angle "α", selected from a range between 10 and 30 degrees, with the first plane (P1), wherein the main frame (102) is mounted on the secondary frame (124) in correspondence with the second plane (P2) such that the machining axis (M) defined by the tool (110) forms the same angle "α" relative to a Z-axis that is perpendicular the surface (S).

2. The machine tool (101) according to claim 1, wherein the secondary frame (124) is wedge-shaped, when viewed from a side of the machine tool (101).

3. The machine tool (101) according to claim 1 or 2, wherein at least part of the secondary frame (124) is a hollow structure.

4. The machine tool (101) according to claim 3, wherein the part of the secondary frame (124) being a hollow structure is located at a rear side of the machine tool (101).

5. The machine tool (101) according to any one of the preceding claims, comprising at least one workpiece support (106) mounted on the working table (105), the workpiece support (106) being configured to retain the workpiece (W) by retaining means actuated by a hydraulic cylinder.

6. The machine tool (101) according to any one of the preceding claims, comprising a tool carrier (108) where the at least one tool holder (109) is coupled to, the tool carrier (108) being configured to horizontally move in a second direction, said second direction being parallel to a horizontal X-axis, wherein the X-axis is perpendicular to the Z-axis.

7. The machine tool (101) according to any one of the preceding claims, wherein the machining axis (M) is substantially perpendicular to a working plane defined by the working table (105) and the working plane is inclined relative to the surface (S) the angle "α".

8. The machine tool (101) according to any one of the preceding claims, comprising a planar plate (118) located beneath the working table (105), the planar plate (118) being inclined relative to the working plane defined by the working table (105) and being configured to drive swarf generated in the machining process outwardly and towards a front side of the machine tool (101).

9. The machine tool (101) according to any one of the preceding claims, wherein the workpiece (W) is a rail wheel, preferably a train wheel.

10. The machine tool (101) according to any one of the preceding claims, wherein the angle "α" is selected from a range between 15° and 25°, preferably from a range between 18° and 22°, and more preferably, the angle "α" is 20°.

11. The machine tool (101) according to any one of the preceding claims, wherein the main frame (102) and the secondary frame (124) are coupled to each other forming one single solid frame.

12. The machine tool (101) according to any one of the preceding claims, wherein the machine tool (101) is a lathe.

13. The machine tool (101) according to any one of the preceding claims, wherein the working table (105) is a rotary table, the centre of the rotary table (105) being preferably centred with the machining axis (M).

14. The machine tool (101) according to claim 13, comprising a gearbox (114) configured to transmit movement of a first motor (113) via transmission means (115) to the rotary table (105), the gearbox being removably fixed to a lower portion of the main frame (102) from below such that the gearbox (114) is accessible and removable from a space (125) delimited by the second frame (124).
